# EUROPÄISCHE PATENTSCHRIFT

(11) **EP 1 189 835 B1**
(45) Veröffentlichungstag und Bekanntmachung des Hinweises auf die Patenterteilung: **09.02.2005**
(21) Anmeldenummer: 00942065.4
(22) Anmeldetag: 14.06.2000
(51) Int. Cl.: C01B 13/34, C01B 13/18, B01J 4/04, B01J 10/00

(54) **SPRÜHPYROLYSE- ODER SPRÜHTROCKNUNGSVERFAHREN SOWIE ANLAGE ZUR DURCHFÜHRUNG**
SPRAY PYROLYSIS OR SPRAY DRYING METHOD AND FACILITY FOR THE IMPLEMENTATION THEREOF
PROCEDE DE PYROLYSE PAR PULVERISATION OU DE SECHAGE PAR PULVERISATION ET INSTALLATION POUR METTRE EN OEUVRE LEDIT PROCEDE

(30) Priorität: 22.06.1999 DE 19928392
(43) Veröffentlichungstag der Anmeldung: 27.03.2002
(73) Patentinhaber: MERCK PATENT GmbH, 64293 Darmstadt (DE)
(72) Erfinder: REMKE, Stefan, D-64289 Darmstadt (DE); RAULIN, Dietmar, D-64683 Einhausen (DE)
(86) Internationale Anmeldenummer: PCT/EP2000/005455
(87) Internationale Veröffentlichungsnummer: WO 2000/078672

(56) Entgegenhaltungen:
- EP-A- 0 369 117
- DE-C- 3 916 643
- US-A- 2 829 710
- US-A- 4 925 647
- PATENT ABSTRACTS OF JAPAN vol. 1995, no. 01, 28. Februar 1995 (1995-02-28) & JP 06 277497 A (KAO CORP), 4. Oktober 1994 (1994-10-04)

## Beschreibung

Die vorliegende Erfindung betrifft ein verbessertes Sprühpyrolyse- oder Sprühtrocknungsverfahren zur Herstellung von anorganischen Oxiden und Mischoxiden oder Pulvermaterialien sowie eine Anlage zur Durchführung des Verfahrens.

Viele Pigmente (z.B. Ti02), Keramiken (Si02, Al203) und Spezialchemikalien (Zn02) werden heute in einer Größenordnung von einigen Millionen Tonnen pro Jahr durch Flammen- Aerosoltechnologie hergestellt. Eine spezielle Form der Flammen- Aerosoltechnologie ist die Sprühpyrolyse, bei der eine PrecursorSalzlösung z.B. direkt in eine Flamme oder in die heißen Verbrennungsgase einer Flamme fein verdüst wird. Dabei verdampft zunächst das Lösungsmittel, z.B. Wasser. Die auskristallisierten Salze werden dann thermisch so zersetzt, daß entweder ein Metalloxid als fester Rückstand verbleibt (z.B. bei Zersetzung von Nitraten) oder das bei der Zersetzung entstehende Metallion von gasförmigem Sauerstoff oxidiert wird. In anderen Prozessen werden die dispersen Produkte aus gasförmigen Edukten in heißer Atmosphäre, z.B. in einem Plasma, synthetisiert. In jedem Fall entstehen feinste Feststoffpartikel, die durch einen Staubabscheider von der Gasströmung abgetrennt und als Produkt gewonnen werden. Qualitätsmerkmal der Pulver ist dabei u.a. eine möglichst definierte Komgrößenverteilung, ein möglichst hoher Dispersionsgrad, eine möglichst exakte Stöchiometrie von Mehrkomponentenprodukten, und ein möglichst gegen Null gehender Anteil an "harten Agglomeraten", die z.B. durch das Zerstäubersystem und die Reaktionsbedingungen, insbesondere die Temperatur beeinflußbar sind.

Während des Transportes können die Partikeln durch Thermophorese oder Diffusion aus der Gasströmung an der Reaktorwand abgeschieden werden und zu ernsten Betriebsproblemen führen [Pratsinis, S.E.: Flame aerosol synthesis of ceramic powders. In- Progress in Energy and Combustion Science 24 Nr. 3 (1998), 197 - 221].

Derzeit werden durch Sprühpyrolyse Precursorpulver für die Herstellung von Hochtemperatursupraieitern nach einem Verfahren hergestellt, das in beispielsweise in DE 39 16 643 C1 beschrieben ist. Dieses und ähnliche Verfahren weisen im Betrieb folgende Probleme auf:
1. Pulverige Ablagerungen an der Reaktorwand müssen in zeitlichen Abständen entfernt werden, wodurch der Betrieb der Anlage unterbrochen werden muß.
2. Aufgrund des Einsprühens in eine Flamme, welche unterschiedliche Temperaturzonen aufweist, reagieren die Lösungströpfchen unter unterschiedlichen Bedingungen. Dadurch wird die Qualität des Produktes (Stöchiometrie, harte Agglomerate) gemindert.
3. Durch die breite Größenverteilung der Tröpfchen, die durch das Zerstäubersystem vorgegeben ist, fällt auch die Korngrößenverteilung des als Pulver anfallenden Produkts breit aus und weist einen Überkornanteil auf, durch den die Produktqualität u.U. gemindert wird.

Es ist daher Aufgabe der Erfindung, ein Verfahren zur Verfügung zu stellen, welches die genannten Nachteile nicht aufweist. Gleichzeitig ist es auch Aufgabe der Erfindung, eine Vorrichtung zur Verfügung zu stellen, wodurch einerseits Ablagerungen an den Wänden der Anlage vermieden werden, und wodurch es gleichzeitig ermöglicht wird, ein möglichst Agglomerat-freies Produkt mit einer definierten Korngrößenverteilung herzustellen, das eine homogene stöchiometrische Zusammensetzung aufweist.

Die Lösung der Aufgabe erfolgt durch eine Sprühpyrolyse- oder Sprühtrocknungsanlage, welche vertikal oder horizontal aufgebaut sein kann und die sich dadurch auszeichnet, daß
a) eine Reaktionsröhre (1) in einem Außenrohr (2) aus hitzebeständigen Stahlblech so untergebracht ist, daß sich zwischen den beiden Rohren ein Ringraum bildet, wobei
b) sich an einem Ende der Rohre ein Zerstäubungssystem (3) befindet und
c) ein oder mehrere Mantelstutzen (5) in den Ringraum münden
d) gegebenenfalls Gaseintrittsschlitze oder -düsen (6) und (7) auf der Höhe des Zerstäubungssystems in die Reaktionsröhre münden.
e) die Gaseintrittsschlize oder -düsen gem. d) durch verschiedene Formen von Gasbrennern ersetzt werden können
f) das Zerstäubungssystem aus einer oder mehreren Ein- oder Mehrstoffdüsen Düsen bestehen kann, und
g) sich am gegenüberliegenden Ende zum Zerstäubangssystem (3) der Reaktions röhre (1) der Gasauslaß (4) befindet.

Die Reaktionsröhre dieser Sprühpyrolyse- oder Sprühtrocknungsanlage besteht aus einem hitzebeständigen, porösen Material.

Gegenstand der Erfindung ist somit eine Sprühpyrolyse- oder Sprühtrocknungsanlage, die eine Reaktionsröhre aus einem bis zu 1200 °C temperaturbeständigen, porösen Material aufweist, welches einen Porendurchmesser von 1 bis 5 µm aufweist.

Vorzugsweise besteht das temperaturbeständige poröse Material aus hitzebeständigen Metall-Legierungen oder geeigneten keramischen Materialien.

Insbesondere handelt es sich bei diesem Material um hitzebeständige Metallsinter-, Metallmaschen- oder Metallfliesmedien.

Gegenstand der vorliegenden Erfindung ist auch eine Sprühpyrolyseoder Sprühtrocknungsanlage deren Zerstäubungssystem aus einer Düsenplatte besteht, auf die die Zertropfungsenergie mit einem piezokeramischen Oszillator übertragen wird, wodurch eine monodisperse Tropfenverteilung entsteht.

Als geeignete Düsenplatten können in der erfindungsgemäßen Anlage Düsenplatten mit Bohrungen mit einem Durchmesser von 10 bis 40 µm eingebaut sein.

Insbesondere ist auch die Reaktionsröhre aus einem gasdurchlässigen, bis zu 1200 °C temperaturbeständigen porösen Material aus hitzebeständigen Metall-Legierungen, bestehend aus hitzebeständigen Metallsinter-, Metallmaschen- oder Metallfliesmedien welches einen Porendurchmesser von 1 bis 5 µm aufweist, Gegenstand der vorliegenden Erfindung.

Das Sprühpyrolyse- oder Sprühtrocknungsverfahren, wird erfindungsgemäß durchgeführt, indem Gas durch einen Mantelstutzen (5) in einen Ringraum geleitet wird, der aus einer Reaktionsröhre (1) und einem Außenrohr (2) gebildet wird, das eingeleitete Gas durch das poröse Material der Reaktionsröhre in den Reaktionsraum strömt, wodurch sich ein von der Mantelfläche abgewandter Gasstrom bildet, der wiederum ein Absetzen gebildeter Partikel auf der Fläche verhindert.

Weiterhin wird eine Lösung oder Suspension eines Metallsalzes oder eine Mischung von Metallsalzen oder eine Metallsalzlösung die suspendierte, unlösliche Partikeln einer metallhaltigen Verbindung, z.B. Metalloxide, enthält, in gewünschtem stöchiometrischen Verhältnis mitttels eines Zerstäubungssystems (3), z.B. bestehend aus einer Düsenplatte, auf die die Zertropfungsenergie mit einem piezokeramischen Oszillator übertragen wird, fein verteilt in Form eines mondispersen Sprays in die Reaktionsröhre (1) eingetragen, wo es mit dem gegebenenfalls vorgeheizten durch die poröse Wand der Reaktionsröhre einströmenden Gas zusammentrifft und entweder im Gasstrom zu einem Pulver mit gleichmäßiger Korngrößenverteilung getrocknet wird und mit dem Gasstrom am Ende der Reaktionsröhre ausgetragen wird oder
durch Zufuhr von zusätzlicher Prozessenergie im Gasstrom zur Zersetzung oder Reaktion gebracht wird, wobei letztere exotherm sein kann, und das gebildete Reaktionsprodukt als feinteiliges Pulver mit dem Gasstrom am Ende der Reaktionsröhre ausgetragen wird.

In einer besonderen Ausführungsform des erfindungsgemäßen Verfahrens wird die Wand der Reaktionsröhre während der exothermen Reaktion ständig durch das von außen durchtretende Gas gekühlt.

Weiterhin kann, falls dieses erforderlich ist, während der Durchführung des erfindungsgemäßen Verfahrens zusätzliche Prozessenergie durch Verbrennung eines Gases mit einem Oxidationsmittel zugeführt werden, wobei entweder
eine Luftzufuhr von außen über den Mantelstutzen (5) und die Gaszugabe von innen über Gasstutzen und Eintrittsschlitze oder Düsen oder Gasbrenner (6) und (7) erfolgt oder
die Gaszugabe von außen (5), die Luftzufuhr von innen über Gasstutzen und Eintrittsschlitz oder Düsen oder Gasbrenner (6) und (7) erfolgt, oder indem
die durch den Mantelstutzen (5) zugeführte Luft elektrisch aufgeheizt wird, durch die poröse Wand strömt und mit dem durch den Gasstutzen und Eintrittsschlitze oder Düsen oder Gasbrenner (6) und (7) zugegebenen Brenngasstrom exotherm reagiert und die Reaktionstemperatur erhöht.

Durch das erfindungsgemäße Verfahren werden Pulvermaterialien mit einer durchschnittlichen Partikelgröße von 0,1 bis 10 µm erhalten.

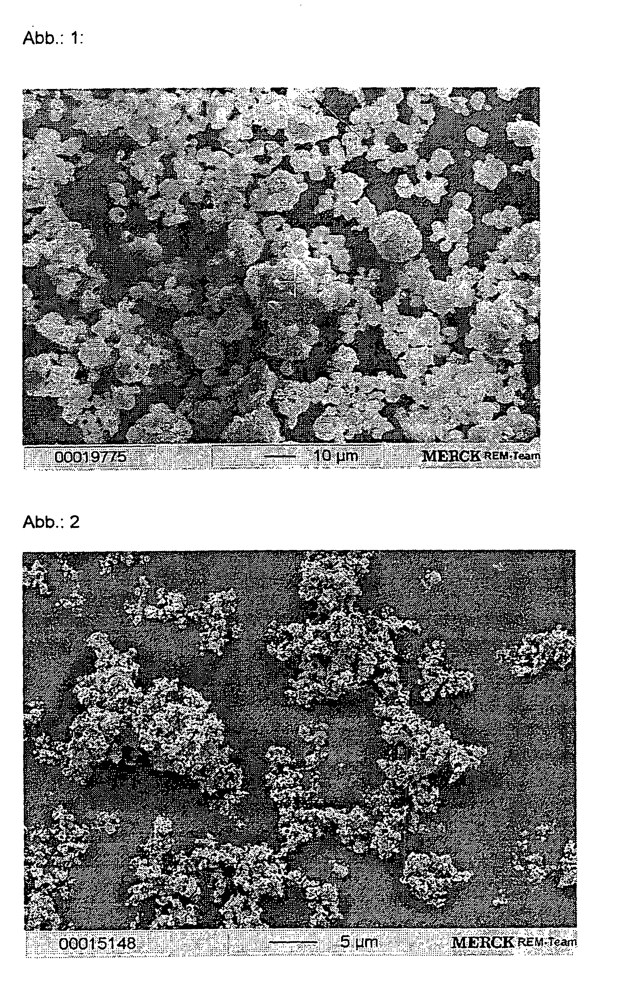

Wie bereits aus der Aufgabenstellung zu erkennen ist, beziehen sich Merkmale der vorliegenden Erfindung insbesondere auf Veränderungen von bereits bekannten Sprühpyrolyseverfahren und zielen auf die Lösung der geschilderten Betriebsprobleme. Im Einzelnen sind dies:
1. Die Ausführung des Reaktionsrohres als poröse Wand, die von einem Gas durchströmt wird, wodurch von der Wand abgewandter Gasstrom entsteht und ein ansetzen von Partikeln verhindert wird (Fig. 1).
2. Die Vorbehandlung und Führung der im Prozeß verwendeten Gase zur gezielten Beeinflussung des Prozesses und der Produktqualität.
3 . Die Verwendung eines bekannten Spraysystems für die Herstellung oxidischer Pulver auf Basis von ein- oder mehrkomponentigen Metalloxiden, welches dadurch gekennzeichnet ist, das es eine sehr enge Größenverteilung bei großer Feinheit der Tröpfchen erzeugt, wodurch die Produktqualität günstig beeinflußt werden kann.

Erfindungsgemäß wird anstatt eines Rohrreaktors aus einem temperaturbeständigen Stahlblech ein zylindrisches Rohr aus einem porösen, stabilen Material konzentrisch in einem Mantelrohr angebracht. Geeignete Materialien für diesen Zweck können solche sein, die für Heißgasfilterkerzen verwendet werden, wie beispielsweise Metallsinter- Metallmaschen- oder Metallfliesmedien. Diese Materialien bestehen aus hitzebeständigen Metallegierungen, die eine Temperaturbeständigkeit bis zu 1200 °C aufweisen. Eine aus einem solchen Material bestehende Reaktionsröhre (1) wird in einem Mantelrohr (2) aus hitzebeständigem Stahlblech derart untergebracht, daß sich zwischen den beiden Röhren ein Ringraum bildet. An einem Ende der wahlweise vertikal oder horizontal stehenden Röhren befindet sich das Zerstäubersystem (3), und am gegenüberliegenden Ende der Gasauslaß (4). Vorzugsweise wird die erfindungsgemäße Anlage vertikal errichtet und das Zerstäubersystem am oberen Ende angebracht, so daß das gebildete Produkt mit dem Gasstrom am unteren Ende ausgetragen werden kann. Durch einen geeigneten Staubabscheider, z.B. Filter, Elektrofilter, Zyklon o.ä. wird der heiße Gasstrom von den gebildeten Partikeln befreit. Als Filtersystem kann ein beliebiges, für diesen Zweck geeignetes System eingesetzt werden.

Ein durch Stutzen (5) in den Ringraum eingeleitetes Gas durchströmt das poröse Medium gleichmäßig durch die Mantelfläche und verhindert so, daß sich Partikeln aus der Heißgasströmung auf der Wandung absetzen. Der Reaktor wird also wie eine Filterkerze in ständiger Abreinigung betrieben.

Die somit zur Verfügung gestellte Anlage zeichnet sich gegenüber früheren Versuchen zur Lösung der beschriebenen Probleme durch einen einfacheren Aufbau aus. Vergleichsweise sei hier auf die in den beiden Patenten DE 42 14 725 C2 und DE 42 14 722 C2 verwendete Anlage hingewiesen, wobei ein Abscheidung an der Reaktorwand durch eine Inertgasschicht vermieden werden soll. Die Inertgasschicht wird erzeugt, indem durch speziell geformte Ringspalte in der Reaktorwand ein Inertgasstrom eingebracht wird, der über den Coandaeffekt an der Reaktorwand anliegt.

Im Gegensatz dazu beruht in der erfindungsgemäßen Anlage die Verhinderung der Partikelablagerung auf der Ausbildung eines von der Wand weg gerichteten Strömungsfeldes.

Durch Vorbehandlung und Führung der Prozeßgase läßt sich der Prozeß gezielt beeinflussen. Es ergeben sich prinzipiell folgende Möglichkeiten:

### 1. Reiner elektrischer Betrieb des Prozesses

Durch die Stutzen (5) wird elektrisch vorgeheiztes Gas, z. B. durch einen elektrischen Lufterhitzer vorgeheizte Luft, in den Ringraum eingeleitet, das durch die poröse Wand in den Reaktionsraum eintritt.

Je nach Bedarf können mehrere solcher Mantelstutzen mit Gas unterschiedlicher Temperatur beschickt werden. Gegebenenfalls kann das Reaktionsrohr gezielt segmentiert werden, um das Temperaturprofil im Reaktionsraum und auch die Durchströmung bestimmter Rohrsegmente beeinflussen zu können.

Die Reaktionstemperatur bei dieser Fahrweise ist wegen der Materialbeständigkeit auf maximal 1200 °C begrenzt und kann in diesen Grenzen frei geregelt werden.

### 2. Reiner Verbrennungsbetrieb

In diesem Fall wird die Prozeßenergie durch Verbrennung eines Gases (z.B. Erdgas oder H₂) mit einem Oxidationsmittel (z.B. Luft) bereitgestellt. Dabei werden die Reaktanden dem Reaktionsrohr getrennt zugegeben. Bei Erreichen der Zündbedingungen reagieren sie exotherm miteinander. Es bereitet keine Probleme, wenn möglicherweise bei dieser Fahrweise die Reaktionstemperatur die maximale Materialtemperatur von 1200 °C überschreitet, da die Reaktorwand durch den hinzutretenden Gasstrom ständig gekühlt wird. Die Regelung der Reakionstemperatur kann über die Luftverhältniszahl der Verbrennung oder über die zugeleitete Gasmenge erfolgen. Dabei ergeben sich grundsätzlich folgende Möglichkeiten der Prozeßführung:
I. Luftzugabe- von außen durch Mantelstutzen (5), Gaszugabe von innen über Gasstutzen und Eintrittsschlitz bzw. Düsen oder Gasbrenner (6),(7).
II. Gaszugabe von außen durch Mantelstutzen (5), Luftzugabe von innen über Gasstutzen und Eintrittsschlitz bzw. Düsen oder Gasbrenner (6),(7).

Gegebenenfalls kann dem Brenngasstrom zusätzlich zu der dem Reaktor über den Mantel zuströmenden Luft ein Teilluftstrom über die Lufteintrittsschlitze, Düsen oder Gasbrenner zugegeben werden, um die Verbrennung des Gases günstig zu beeinflussen.

### 3. Kombinierter Elektro-/Verbrennungsbetrieb

Dieses Verfahren besteht aus einer Kombination des unter 1. und 2. beschriebenen Betriebs der Anlage. Hier kann der durch den Mantelstutzen (5) aufgegebene Luftstrom elektrisch vorgeheizt werden. Dieser Heißgasstrom kann dann mit dem durch den Gasstutzen (6) und die Eintrittsschlitze, Düsen oder Gasbrenner (7) zugegebenen Brenngasstrom exotherm reagieren und somit die Reaktionstemperatur erhöhen. Diese Fahrweise ermöglicht sowohl eine sichere Zündung durch Vorwärmung des Oxidationsmittels über die Zündtemperatur als auch eine luftzahlunabhängige Regelung der Reaktionstemperatur durch elektrische Beeinflussung der Vorwärmtemperatur.

Prinzipiell sind die beiden unter 1 und 2 genannten Fahrweisen mit Vorwärmung von Luft bzw. Gas möglich.

Eine Betriebsweise wie unter 3. beschrieben hat gegenüber der unter 1. beschriebenen den Vorteil, daß eine höhere Reaktionstemperatur erreichbar ist. Gegenüber einer Betriebsweise wie unter 2. hat die letzte Variation den Vorteil einer sicheren Zündung.

Neben der beschriebenen erfindungsgemäßen Führung der Gasströme kann die vorliegende Anlage mit einer oder mehreren Ein- oder Mehrstoffdüsen oder mit einem Spraysystem, wie in Brenn, G.- Heliö, T.- Durst, F.: A new apparatus for the production of monodisperse sprays at high flow rates. In: Chemical Engineering Science 52 Nr. 2 (1997), 237 - 244 uno Brenn, G.-Durst, F. - Tropea, C.: Monodisperse Sprays for various purposes - their production and characteristics. In-. Part. Part. Syst. Charact. 13 (1996), 179 - 185, beschrieben, ausgerüstet werden, das auf dem Prinzip des Rayleigh'schen Strahlzerfalls auf Grund hochfrequenter Anregung basiert.

Dieses System ermöglicht es, ein monodisperses Spray zu erzeugen. Die Zertropfungsenergie wird durch die Anregung einer Düsenplatte mit einem piezokeramischen Oszillator übertragen, auf der die Flüssigkeitssäule ansteht. Die Düsenplatte ist mit Bohrungen versehen, die mit Laserstrahlen gebohrt werden können und Durchmesser bis hinab zu 10 µm aufweisen können. Wahlweise können Düsenplatten mit unterschiedlichen Bohrungen eingesetzt werden. Es können solche mit Durchmessern von 10 bis 40 µm eingesetzt werden. Erfahrungsgemäß ist es jedoch so, daß die Produktqualität um so besser ist, je kleiner der Lochdurchmesser der eingesetzten Düsenplatte ist. Üblicherweise beträgt der Tropfendurchmesser der versprühten Lösungen ca. das 2-fache des Bohrungsdurchmessers. Minimal kann also auf diese Weise ein Tropfendurchmesser von 20 µm erzielt werden, was feiner ist als die Tropfen der meisten konventionellen Düsensysteme. Für die Sprayerzeugung in Sprühpyrolyseprozessen weist daher diese Düse folgende Vorteile auf:
· Es ist kein Zerstäubungsgas erforderlich.
· Es wird eine monodispers Tropfengrößenverteilung erzielt.
· Es können beliebig gebohrte Düsenmuster auf der Düsenplatte angebracht sein.
· Es können Düsenplatten mit großer Fläche eingesetzt werden.
· Es können Sprays mit feinsten Tropfendurchmessem erzeugt werden bei großen Durchsätzen.

Die enge Tropfenverteilung bei hoher Feinheit beeinflußt die Partikelgrößenverteilung des Produktes in vorteilhafter Weise, so daß feinste Pulvermaterialien mit einer gleichmäßigen Komgrößenverteilung erzeugt werden können.

Die Variabilität bei der Gestaltung der Düsenplatte und die Tatsache, daß die Zerstäubung ohne zusätzliches Gas realisiert werden kann, ermöglicht eine optimale Anpassung des Systems an die Verwendung der Anlage als Sprühpyrolyseanlage.

Entsprechende Versuche haben die besondere Eignung des beschriebene Systems bei der Herstellung von keramischen Pulvern durch Sprühpyrolyse gezeigt.

Mit den gegebenen Informationen ist es dem Fachmann möglich, je nach Bedarf unterschiedliche Variationen der beschriebenen Anlage zu verwirklichen, die in unterschiedlichster Betriebsweise jeweils angepasst an das gewünschte Produkt gefahren werden können. Dementsprechend fallen in den Schutzbereich dieser Erfindung nicht nur die in dieser Anmeldung speziell beschriebenen Ausführungsformen der Anlage und des Verfahrens sondern auch deren in einfacher Weise durchführbaren Abänderungen.

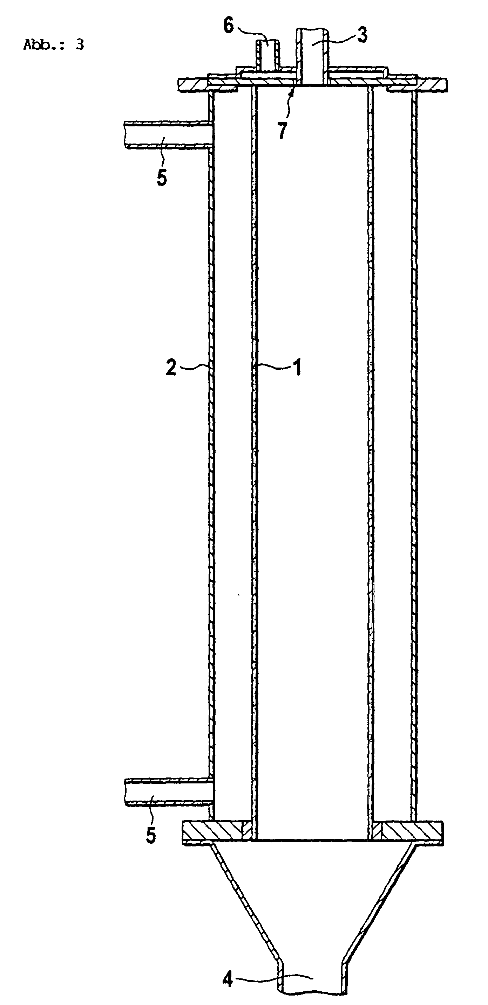

Abb. 3 zeigt eine mögliche Ausführungsform der erfindungsgemäßen Anlage. Mit den Ziffern (1) bis (7) bezeichneten Teile der Anlage sind folgende:
(1) Reaktionsröhre
(2) Außenrohr
(3) Zerstäubungssystem
(4) Gasauslaß
(5) Mantelstutzen
(6) Gasstutzen
(7) Eintrittsschlitz bzw. -Düsen oder Gasbrenner für Reaktionsgas

### Beispiele

### Apparatur und Durchführung

Als Apparatur dient ein vertikal angeordneter Rohrreaktor von 200cm Länge und 40cm Außendurchmesser. Die innen konzentrisch angebrachte Reaktionsröhre hat einen Innendurchmesser von 20cm und besteht aus dem gesinterten Pulver einer hitzebeständigen Metalllegierung (Hastelloy X®). Am Kopfende befindet sich ein Gasbrenner, der, je nach Betriebsart, über Stutzen mit Brenngas und Verbrennungsluft versorgt werden kann. Im Zentrum des Brenners befindet sich ein Hüllrohr, durch das eine Zerstäubungslanze in des Reaktionsrohr geschoben werden kann. Am unteren Ende mündet das Reaktionsrohr in ein Heißgasfilter. Die den Ringraum speisenden Mantelstutzen sind mit elektrischen Lufterhitzern versehen, so daß die zuströmende Luft auf maximal 900°C vorgeheizt werden kann. Die Metallsalzlösung wird mit der Zerstäubungslanze in den vorgeheizten Reaktor eingesprüht. Das erhaltene Pulver wird in dem nachgeschalteten Heißgasfilter gesammelt.

Die zu versprühende Metallsalzlösung bestand aus Nitraten der Elemente Pb, Bi, Sr, Ca, Cu, die in folgendem Mischungsverhältnis mit einer geringen Menge Salpetersäure in Wasser gelöst wurden:

| Metallsalz | Einwaage [kg/kg] |
|---|---|
| Pb(NO3)2 | 0.022 |
| Bi(NO3)3*5H2O | 0.155 |
| Sr(NO3)2 | 0.079 |
| Ca(NO3)2*4H2O | 0.095 |
| Cu(NO3)2*3H2O | 0.145 |
| HNO3 | 0.087 |
| Wasser | 0.583 |

Durch dieses Mischungsverhältnis ergibt sich ein Molverhältnis der in der Lösung enthaltenen Metalle von Pb0,33Bi1,80 Sr1,87 Ca2,00 Cu3,00. Die Lösung sollte durch Versprühen in den oben beschriebenen Reaktor und Erhitzung mit Verdampfung des Wassers und teilweiser Zersetzung der Metallnitrate in ein teilweise oxidisches Pulver überführt werden, welches in engen Grenzen (Abweichungen < 5 % von der theoretisch ermittelten Stöchiometrie) die gleiche Stöchiometrie aufweist, wie die Me-Nitratlösung. Auf diese Weise sollte ein teilweise oxidisches Precursorpulver zur Herstellung von Hochtemperatur-Supraleitern erhalten werden.

### Beispiel 1

In drei Testläufen wurde die Me-Nitratlösung mit einer Zweistoffdüse bei einer Dosierung von 3.5, 5 und 12.5 kg/h über eine Dauer von jeweils 8 Stunden in den Reaktor versprüht. Der Reaktor wurde dabei ausschließlich über die elektrischen Lufterhitzer beheizt. Der in den in den Ringraum eintretenden Luftstrom (76 kg/h) wurde dadurch auf eine Temperatur von 700°C, gemessen am oberen Ende des Ringraumes. erwärmt. Die heiße Luft drang durch das poröse Reaktionsrohr und mischte sich mit dem Sprühnebel, wodurch das Wasser aus den Tröpfchen verdampfte und sich die entstandenen Metallnitratpartikeln teilweise zersetzten. Die Zersetzung zeigte sich während des Prozesses in den NOx-Gehalten, die im Abgas der Apparatur gemessen wurden. Als wesentliche Prozeßdaten wurden der Lösungsmassenstrom dm/dt _{Lsg}, die Temperatur im Ringraum des oberen Reaktorteils Tₒ und die Temperatur im Verbindungsrohr zwischen Reaktor und Heißgasfilter (T_{f}) gemessen. Die nachfolgende Tabelle zeigt die mittleren Meßwerte.

| Testlauf Nr. | dm/dt _{Lsg} | Tₒ | T_{f} |
|---|---|---|---|
| 1 | 3,5 | 700 | 450 |
| 2 | 5 | 700 | 440 |
| 3 | 12 | 700 | 380 |

Eine Untersuchung des Reaktionsrohres nach jedem Testlauf zeigte, daß die Rohrwandung jeweils absolut frei von Pulverbelägen war. Das erhaltene Pulver wurde auf harte Agglomerate, Morphologie, Glühverlust und Stöchiometrie untersucht. Da es für die Analyse einzelner harter Agglomerate kein zuverlässiges Meßverfahren gibt, wurde eine größere Pulverprohe mit einem Löffelspatel über ein Blatt Papier gestrichen. Bei Vorhandensein von harten, gröberen Partikeln zeigen sich dabei normalerweise Spuren in der geglätteten Pulveroberfläche. Da solche Spuren nicht beobachtet wurden kann darauf geschlossen werden, daß keine harten Agglomerate im Pulver vorhanden sind. Die übrigen Analysen zeigt die nachfolgende Tabelle. Die Stöchiometrie ist als Molzahl gemäß der o.a. Summenformel angegeben.

| Testlauf Nr. | Glühverlust | Pb | Bi | Sr | Ca | Cu |
|---|---|---|---|---|---|---|
| 1 | 27 Gew-% | 0.324 | 1.763 | 1.872 | 2.003 | 3.038 |
| 2 | 29 Gew-% | 0.330 | 1.771 | 1.855 | 2.011 | 3.032 |
| 3 | 32 Gew-% | 0.333 | 1.777 | 1.862 | 2.012 | 3.016 |

Erwartungsgemäß zeigte sich ein steigender Glühverlust mit zunehmendem Lösungsdurchsatz, da der größte Teil der angebotenen Wärme für die Wasserverdampfung verbraucht wird. Der theoretische Glühverlust der reinen Me-Nitratmischun (wasserfrei) beträgt ca. 50 Gew-%. Die Abweichungen der Stöchiometrie gegenüber der eingesetzten Lösung lagen bei allen Elementen und Testläufen <= 2 %.

Die Morphologie der entstandenen Partikel wurde durch Rasterelektronenmikroskopie untersucht (Abb. 1). Es zeigten sich Primärpartikeln mit einem Durchmesser von überwiegend zwischen 1 und 10µm, die eine hohlkugelige, teils schwammartige Struktur aufweisen.

### Beispiel 2

Bei einem weiteren Testlauf wurde der am Kopf des Reaktors angebrachte Gasbrenner mit 6 m³/h Wasserstoff und Luft in einem leicht überstöchiometrischen Verhältnis betrieben. Der Reaktormantel wurde wiederum mit 76 kg/h Luft beaufschlagt, die bei diesem Testlauf mit den elektrischen Lufterhitzern jedoch nur auf 250°C, gemessen am oberen Ende des Ringraumes, erwärmt wurde. Die Lösung wurde mit einem Massenstrom von 5 kg/h mittels der oben erwähnten Zweistoffdüse über eine Dauer von 8 Stunden direkt in die Wasserstoffflamme gesprüht. Die Temperatur zwischen Reaktor und Filter betrug dabei im Mittel 520°C. Auch bei diesem Testlauf zeigten sich keinerlei Ablagerungen an den Reaktorwandungen.

Das Pulver wurde den gleichen Analysen unterzogen, wie in Beispiel 1 beschrieben. Dabei zeigte der Löffeltest leichte Spuren in der Oberfläche des verstrichenen Pulvers, die auf einige wenige härtere, vermutlich in der heißen Flamme angeschmolzene Agglomerate schließen lassen. Die übrigen Analysen zeigen einen niedrigeren Glühverlust und eine größere Abweichung der Stöchiometrie von > 3 aber < 5% gegenüber der eingesetzten Lösung. Beides ist auf die intensivere Erwärmung der Tröpfchen in der herßen Flamme zurückzuführen.

| Testlauf Nr. | Glühverlust | Pb | Bi | Sr | Ca | Cu |
|---|---|---|---|---|---|---|
| 4 | 12 Gew-% | 0.327 | 1.785 | 1.827 | 1.961 | 3.099 |

Die Abbildung 2 zeigt gegenüber Beispiel 1 eine ganz unterschiedliche Morphologie. Unregelmäßige Primärpartikeln mit Durchmessern z.T. weit unterhalb 1 µm sind zu mehr oder weniger festen Aggregaten zusammengelagert.

## Patentansprüche

1. Sprühpyrolyseanlage, **dadurch gekennzeichnet, dass** in einer vertikal oder horizontal aufgebauten Anlage
a) eine Reaktionsröhre (1) aus einem bis zu 1200 °C temperaturbeständigen porösen Material, welches Porendurchmesser von 1 bis 5 µm aufweist, in einem Außenrohr (2) aus hitzebeständigem Stahlblech so untergebracht ist, so dass sich zwischen den beiden Rohren ein Ringraum bildet, wobei sich
b) an einem Ende der Rohre ein Zerstäubungssystem (3) befindet und am anderen Ende der Gasauslaß (4), während
c) ein oder mehrere Mantelstutzen (5) in den Ringraum, wahlweise in Höhe des Zerstäubungssystems oder über die Länge der Anlage verteilt mündet(n) und
d) gegebenenfalls Gaseintrittsstutzen oder -düsen (6) und (7), u. U. auch in Form eines Gasbrenners auf der Höhe des Zerstäubungssystems in die Reaktionsröhre münden.

2. Sprühpyrolyseanlage gemäß Anspruch 1, **dadurch gekennzeichnet, dass** die Reaktionsröhre (1) aus temperaturbeständigen porösen Metall-Legierungen oder geeigneten keramischen Materialien besteht.

3. Sprühpyrolyseanlage gemäß Anspruch 1, **dadurch gekennzeichnet, dass** die Reaktionsröhre (1) aus hitzebeständigen Metallsinter-, Metallmaschen- oder Metallfliesmedien besteht.

4. Sprühpyrolyseanlage gemäß Anspruch 1, **dadurch gekennzeichnet, dass** das Zerstäubungssystem aus einer Düsenplatte besteht, auf die Zerstäubungsenergie mit einem piezokeramischen Oszillator übertragen wird.

5. Sprühpyrolyseanlage gemäß Anspruch 4, **dadurch gekennzeichnet, dass** die Düsenplatte Bohrungen von 10 bis 40 µm aufweist.

6. Reaktionsröhre für Sprühpyrolysereaktionen aus einem gasdurchlässigen bis zu 1200 °C temperaturbeständigen, porösen Material aus hitzebeständigen Metall-Legierungen, bestehend aus hitzebeständigen Metallsinter-, Metallmaschen- oder Metallfliesmedien, mit einem Porendurchmesser von 1 bis 5 µm.

7. Sprühpyrolyseverfahren, **dadurch gekennzeichnet, dass**
a) Gas durch einen Mantelstutzen (5) in einen Ringraum geleitet wird, der aus einer Reaktionsröhre (1) und einem Außenrohr (2) gebildet wird,
b) das eingeleitete Gas, welches gegebenenfalls vorgeheizt ist, durch das poröse, bis 1200 °C temperaturbeständige Material mit einer Porengröße von 1 bis 5 µm der Reaktionsröhre in den Reaktionsraum strömt, wodurch sich ein von der Mantelfläche abgewandter Gasstrom bildet, der ein Absetzen gebildeter Partikel auf der Fläche verhindert, und
c) das in die Reaktionsröhre eintretende Gas mit einem in der Reaktionsröhre erzeugten monodispersen Spray zur Reaktion gebracht wird, wobei die Reaktion eine Zersetzung oder eine exotherme Reaktion sein kann.

8. Sprühpyrolyseverfahren gemäß Anspruch 7, **dadurch gekennzeichnet, dass** eine Lösung oder Suspension eines Metallsalzes oder einer Mischung von Metallsalzen oder eine Metallsalzlösung, die suspendierte unlösliche Partikeln einer metallhaltigen Verbindung wie z. B. Metalloxide enthält, in gewünschtem stöchiometrischen Verhältnis mittels eines Zerstäubersystems (3), bestehend aus einer Düsenplatte, auf die Zertropfungsenergie mit einem piezokeramischen Oszillator übertragen wird, fein verteilt in Form eines monodispersen Sprays in die Reaktionsröhre (1) eingetragen wird, wo es mit dem durch die poröse Wand der Reaktionsröhre einströmenden vorgeheizten Gas zusammentrifft und
durch Zufuhr von zusätzlicher Prozessenergie im Gasstrom zur Zersetzung oder Reaktion gebracht wird, wobei letztere exotherm sein kann,
und das gebildete partikelförmige Produkt mit dem Gasstrom am Ende der Reaktionsröhre ausgetragen wird.

9. Verfahren gemäß Anspruch 8, **dadurch gekennzeichnet, dass** die Wand der Reaktionsröhre während der exothermen Reaktion ständig durch das von außen durchtretende Gas gekühlt wird.

10. Verfahren gemäß Anspruch 8, **dadurch gekennzeichnet, dass** statt des Zerstäubersystems (3), bestehend aus einer Düsenplatte, auf die Zertropfungsenergie mit einem piezokeramischen Oszillator übertragen wird,
eine oder mehrere Ein- oder Mehrstoffdüsen als Zerstäuber dienen.

11. Verfahren gemäß der Ansprüche 7 bis 10, **dadurch gekennzeichnet, dass** zusätzliche Prozessenergie durch Verbrennung eines Gases mit einem Oxidationsmittel zugeführt wird, wobei entweder eine Luftzufuhr von außen über den Mantelstutzen (5) und die Gaszugabe von innen über Gasstutzen und Eintrittsschlitz (6) und (7)
oder
die Gaszugabe von außen (5) und die Luftzugabe von innen über Gasstutzen und Eintrittsschlitz (6) und (7) erfolgt, oder
die durch den Mantelstutzen (5) zugeführte Luft elektrisch aufgeheizt wird, durch die poröse Wand strömt und mit dem durch den Gasstutzen und den Eintrittsschlitz (6) und (7) zugegebenen Brenngasstrom exotherm reagiert und die Reaktionstemperatur erhöht.

## Claims

1. Spray pyrolysis plant, **characterised in that**, in a plant which is constructed vertically or horizontally,
a) a reaction tube (1) comprising a porous material which is heat-resistant up to 1200°C and has pore diameters of 1 to 5 µm is accommodated in an outer tube (2) made from heat-resistant steel sheeting in such a way that an annular space is formed between the two tubes, where
b) an atomisation system (3) is located at one end of the tubes and the gas outlet (4) is located at the other end, while
c) one or more jacket connectors (5) lead into the annular space, optionally at the height of the atomisation system or distributed over the length of the plant, and
d) if desired, gas inlet connectors or nozzles (6) and (7), under certain circumstances also in the form of a gas burner, lead into the reaction tube at the height of the atomisation system.

2. Spray pyrolysis plant according to Claim 1, **characterised in that** the reaction tube (1) consists of heat-resistant, porous metal alloys or suitable ceramic materials.

3. Spray pyrolysis plant according to Claim 1, **characterised in that** the reaction tube (1) consists of heat-resistant sintered metal, metal mesh or non-woven metal media.

4. Spray pyrolysis plant according to Claim 1, **characterised in that** the atomisation system consists of a nozzle plate to which atomisation energy is transferred by means of a piezoceramic oscillator.

5. Spray pyrolysis plant according to Claim 4, **characterised in that** the nozzle plate has holes of 10 to 40 µm.

6. Reaction tube for spray pyrolysis reactions made from a gas-permeable, porous material comprising heat-resistant metal alloys, consisting of heat-resistant sintered metal, metal mesh or non-woven metal media, which is heat-resistant up to 1200°C and has a pore diameter of 1 to 5 µm.

7. Spray pyrolysis process, **characterised in that**
a) gas is passed through a jacket connector (5) into an annular space formed by a reaction tube (1) and an outer tube (2),
b) the introduced gas, which is optionally preheated, flows through the porous material, which is heat-resistant up to 1200°C and has a pore size of 1 to 5 µm, of the reaction tube into the reaction space, resulting in the formation of a gas stream away from the jacket surface, which prevents deposition of formed particles on the surface, and
c) the gas entering the reaction tube is brought to reaction with a monodisperse spray generated in the reaction tube, where the reaction can be a decomposition or an exothermic reaction.

8. Spray pyrolysis process according to Claim 7, **characterised in that** a solution or suspension of a metal salt or a mixture of metal salts or a metal salt solution which comprises suspended, insoluble particles of a metal-containing compound, such as, for example, metal oxides, in the desired stoichiometric ratio is introduced in finely divided form as a monodisperse spray by means of an atomiser system (3) consisting of a nozzle plate, to which atomisation energy is transferred by means of a piezoceramic oscillator, into the reaction tube (1), where it encounters the preheated gas flowing in through the porous wall of the reaction tube and
is caused to decompose or brought to reaction, where the latter may be exothermic, in the gas stream through the supply of additional process energy,
and the particulate product formed is discharged with the gas stream at the end of the reaction tube.

9. Process according to Claim 8, **characterised in that** the wall of the reaction tube is constantly cooled during the exothermic reaction by the gas passing through from the outside.

10. Process according to Claim 8, **characterised in that**, instead of the atomiser system (3) consisting of a nozzle plate, to which atomisation energy is transferred by means of a piezoceramic oscillator, one or more one- or multicomponent nozzles serve as atomiser.

11. Process according to Claims 7 to 10, **characterised in that** additional process energy is supplied by burning a gas with an oxidant, where either the supply of air takes place from the outside via the jacket connector (5) and the addition of gas takes place from the inside via gas connectors and inlet slot (6) and (7), or
the addition of gas takes place from the outside (5) and the addition of air takes place from the inside via gas connectors and inlet slot (6) and (7), or
the air supplied through the jacket connector (5) is electrically heated, flows through the porous wall and reacts exothermically with the stream of fuel gas added through the gas connector and inlet slot (6) and (7) and increases the reaction temperature.

## Revendications

1. Equipement de pyrolyse par pulvérisation, **caractérisé en ce que**, dans un équipement qui est construit verticalement ou horizontalement,
a) un tube de réaction (1 ) qui comprend un matériau poreux qui est résistant à la chaleur jusqu'à 1200°C et qui présente des diamètres de pores de 1 à 5 µm est logé dans un tube externe (2) qui est réalisé à partir d'une feuille en acier résistant à la chaleur de telle sorte qu'un espace annulaire soit formé entre les deux tubes, dans lequel
b) un système d'atomisation (3) est localisé au niveau d'une extrémité des tubes et la sortie de gaz (4) est localisée au niveau de l'autre extrémité, tandis que,
c) un ou plusieurs connecteurs de chemise (5) sont acheminés dans l'espace annulaire, en option à la hauteur du système d'atomisation, ou sont distribués sur la longueur de l'équipement, et
d) si on le souhaite, des connecteurs d'entrée de gaz ou éjecteurs (6) et (7), sous certaines circonstances également sous la forme d'un brûleur de gaz, sont acheminés dans le tube de réaction à la hauteur du système d'atomisation.

2. Equipement de pyrolyse par pulvérisation selon la revendication 1, **caractérisé en ce que** le tube de réaction (1) est constitué en alliages de métaux poreux résistant à la chaleur ou en matériaux de céramique appropriés.

3. Equipement de pyrolyse par pulvérisation selon la revendication 1, **caractérisé en ce que** le tube de réaction (1) est constitué par un métal fritté résistant à la chaleur, par un maillage en métal ou par des milieux en métal non tissés.

4. Equipement de pyrolyse par pulvérisation selon la revendication 1, **caractérisé en ce que** le système d'atomisation est constitué par une plaque d'éjecteurs sur laquelle de l'énergie d'atomisation est transférée au moyen d'un oscillateur en piézocéramique.

5. Equipement de pyrolyse par pulvérisation selon la revendication 4, **caractérisé en ce que** la plaque d'éjecteurs comporte des trous de 10 à 40 µm.

6. Tube de réaction pour des réactions de pyrolyse par pulvérisation réalisées à partir d'un matériau poreux perméable aux gaz comprenant des alliages de métaux résistant à la chaleur, qui est constitué par un métal fritté résistant à la chaleur, par un maillage en métal ou par des milieux en métal non tissés, qui est résistant à la chaleur jusqu'à 1200°C et qui présente un diamètre de pores de 1 à 5 µm.

7. Procédé de pyrolyse par pulvérisation, **caractérisé en ce que** :
a) du gaz est passé au travers d'un connecteur de chemise (5) à l'intérieur d'un espace annulaire qui est formé par un tube de réaction (1 ) et par un tube externe (2),
b) le gaz introduit qui est en option préchauffé circule au travers du matériau poreux, qui est résistant à la chaleur jusqu'à 1200°C et qui présente une dimension de pores de 1 à 5 µm, du tube de réaction dans l'espace de réaction, ce qui conduit à la formation d'un flux de gaz à distance de la surface de chemise, ce qui empêche le dépôt de particules formées sur la surface, et
c) le gaz qui entre dans le tube de réaction est amené à réagir avec une pulvérisation monodispersée qui est générée dans le tube de réaction, dans lequel la réaction peut être une décomposition ou une réaction exothermique.

8. Procédé de pyrolyse par pulvérisation selon la revendication 7, **caractérisé en ce qu'**une solution ou une suspension d'un sel de métal ou d'un mélange de sels de métaux ou une solution de sel de métal qui comprend des particules insolubles suspendues d'un composé contenant un métal tel que par exemple des oxydes métalliques selon le rapport stoechiométrique souhaité est introduite selon une forme finement divisée en tant que pulvérisation monodispersée au moyen d'un système d'atomiseur (3) qui est constitué par une plaque d'éjecteurs, sur laquelle de l'énergie d'atomisation est transférée au moyen d'un oscillateur en piézocéramique, dans le tube de réaction (1), dans lequel elle contre le gaz préchauffé circulant au travers de la paroi poreuse du tube de réaction et elle est amenée à se décomposer ou à réagir, laquelle réaction peut être exothermique, dans le flux de gaz par l'intermédiaire de l'application d'une énergie de procédé additionnelle et le produit particulaire formé est déchargé à l'aide du flux de gaz au niveau de l'extrémité du tube de réaction.

9. Procédé selon la revendication 8, **caractérisé en ce que** la paroi du tube de réaction est refroidie constamment pendant la réaction exothermique au moyen du gaz qui passe au travers depuis l'extérieur.

10. Procédé selon la revendication 8, **caractérisé en ce que**, en lieu et place du système d'atomiseur (3) qui est constitué par une plaque d'éjecteurs sur laquelle de l'énergie d'atomisation est transférée au moyen d'un oscillateur en piézocéramique, un ou plusieurs éjecteurs mono-composants ou multi-composants jouent le rôle d'atomiseur.

11. Procédé selon les revendications 7 à 10, **caractérisé en ce que** de l'énergie de procédé additionnelle est appliquée en faisant brûler un gaz avec un oxydant, dans lequel soit l'application d'air est réalisée depuis l'extérieur via le connecteur de chemise (5) et l'addition de gaz est réalisée depuis l'intérieur via des connecteurs de gaz et une fente d'entrée (6) et (7), soit l'addition de gaz est réalisée depuis l'extérieur (5) et l'addition d'air est réalisée depuis l'intérieur via des connecteurs de gaz et une fente d'entrée (6) et (7), soit l'air qui est appliqué par l'intermédiaire du connecteur de chemise (5) est chauffé électriquement, circule au travers de la paroi poreuse et réagit de façon exothermique avec le flux de gaz de carburant additionné par l'intermédiaire du connecteur de gaz et de la fente d'entrée (6) et (7) et augmente la température de réaction.
